# EUROPEAN PATENT SPECIFICATION

(11) **EP 0 544 764 B1**
(45) Date of publication and mention of the grant of the patent: **08.11.1995**
(21) Application number: 91915379.1
(22) Date of filing: 23.07.1991
(51) Int. Cl.: F02K 1/12, F02K 1/00

(54) **AXISYMMETRIC NOZZLE WITH GIMBLED UNISON RING**
BEWEGLICHE SCHUBDÜSE MIT EINEM KARDANISCHEN BEDIENUNGSRING
TUYERE AXISYMETRIQUE AVEC ANNEAU DE COMMANDE SYNCHRONISEE SUSPENDU

(30) Priority: 23.08.1990 US 571948
(43) Date of publication of application: 09.06.1993
(73) Proprietor: UNITED TECHNOLOGIES CORPORATION, Hartford, CT 06101 (US)
(72) Inventor: MCLAFFERTY, George, H., North Palm Beach, FL 33408 (US); THAYER, Edward, B., Palm Beach Garden, FL 33418 (US); STEWART, Jim, D., Sebastian, FL 32958 (US)
(74) Representative: Klunker . Schmitt-Nilson . Hirsch
(86) International application number: US9105197
(87) International publication number: WO9203649

(56) References cited:
- GB-A- 2 230 239
- US-A- 3 003 312
- US-A- 3 442 455
- US-A- 4 128 208

## Description

The present invention relates to a thrust vectoring exhaust nozzle for an aircraft gas turbine engine.

Variable geometry exhaust ducts for aircraft gas turbine engine installations frequently employ an axisymmetric arrangement of overlapping flap and seal members to define the periphery of the exhaust duct. By providing an intermediate, transverse hinge in the flap and seal members, prior art ducts have achieved convergent-divergent arrangements wherein the duct may be configured to define a variable area throat which is necessary for optimized engine performance, particularly in high speed aircraft installations using afterburning for thrust augmentation.

Such prior art axisymmetric nozzles direct the exhaust gas aftward from the aircraft generally along a central axis. Certain alternative designs exist for attempting to provide a practical arrangement for selectively diverting the exhaust gas from this axial centerline in order to achieve vectored thrust for enhancing aircraft maneuverability. Such thrust vectoring nozzle configurations have typically not been adaptable to the axisymmetric nozzles described hereinabove and further are usually limited to redirecting exhaust gas in only a single plane. An additional drawback of prior art vectoring nozzle has been the increased weight of the actuators and exhaust gas directing surfaces at the aftmost portion of the exhaust duct and aircraft, thus adding additional weight at the most undesirable location in the aircraft due to stability and balance considerations.

What is needed is a thrust vectoring exhaust duct design which is adaptable to both convergent-divergent exhaust arrangements as well as lightweight, axisymmetric configurations.

Subject-matter of the invention is an exhaust nozzle for selectively varying the direction of the discharge of a stream of exhaust gas, comprising
an exhaust duct having an upstream entry end and a downstream discharge end, including
a plurality of flaps, each flap disposed adjacent to other flaps extending from the entry end to the discharge end and forming a portion of the exhaust duct perimeter,
characterized by
each flap being secured at the upstream end thereof to a supporting universal joint; and
means, disposed between an adjacent upstream static structure and each flap, for selectively positioning said flap relative to the corresponding universal joint.

An exhaust nozzle having the pre-characterizing features of the preceding paragraph is known from the document US-A-3 442 455. The exhaust duct of this nozzle has a square shaped cross-section. In the document US-A-4 128 208 an exhaust nozzle is disclosed which comprises a plurality of flaps in circumferential arrangement. The flaps are operable to vary the outlet area of the nozzle, but are not operable to vary the direction of the exhaust stream.

The present invention provides a thrust vectoring, axisymmetric nozzle for selectively vectoring the discharge direction of a stream of exhaust gas from a gas turbine engine or the like. Such nozzles may be used in an aircraft to enhance maneuverability without increasing the size or losses resulting from typical aircraft control surfaces.

The invention comprises a plurality of longitudinally extending control flaps defining a moveable exhaust duct. Each flap is secured by a universal joint at the upstream end to a discharge throat and at a point downstream of the universal joint to one end of a positioning link. Each positioning link is secured at the other end to a moveable, coaxial unison ring whereby the entire control flap assembly can be collectively positioned.

The unison ring may be translated axially with respect to the engine centerline as well as tilted or skewed with respect thereto, thus causing the nozzle according to the present invention to collectively position the individual control flaps so as to vector the exhaust gas stream relative the nozzle central axis, or vary the nozzle discharge flow area as defined collectively by the plurality of flaps.

The nozzle according to the present invention provides the advantages of lightweight yaw and pitch thrust vectoring and a high degree of compatibility with current nozzle installations. The nozzle according to the present invention is also highly compatible with a variable throat area, convergent-divergent exhaust configuration, wherein the upstream end of each flap is secured to a corresponding moveable convergent flap member.

Fig. 1 shows a perspective view of the exterior of a nozzle duct according to the present invention.

Fig. 2 shows a side elevation of the nozzle duct.

Fig. 3 shows a cross section of the upper flap assembly and linkage.

Fig. 4 shows an alternate flap universal joint arrangement.

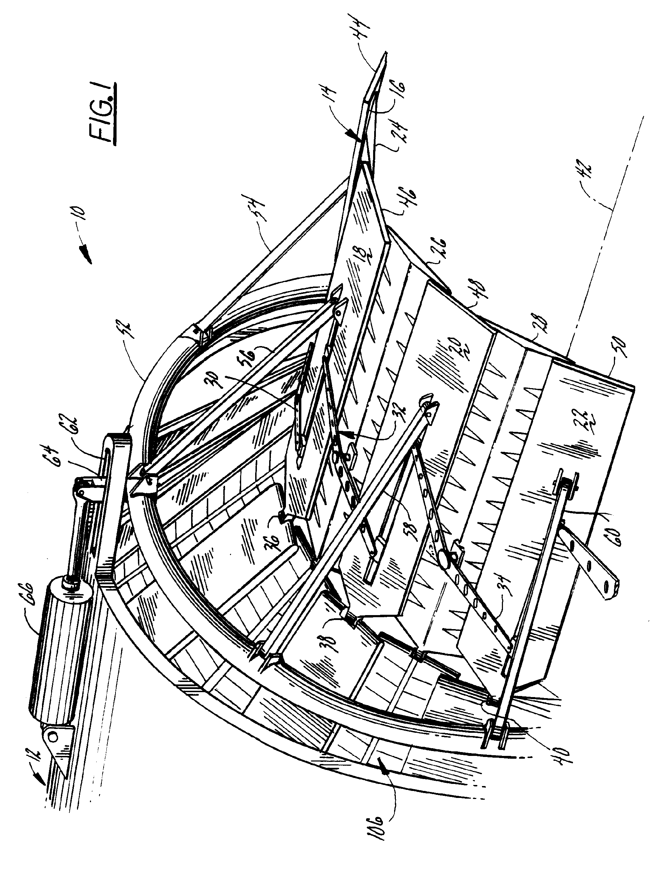

Referring now to the drawing figures, and in particular to Fig. 1 thereof, a nozzle arrangement 10 according to the present invention may be viewed in perspective. The nozzle 10 includes a static upstream structure 12 integral with the airframe for supporting the outlet duct 14 according to the present invention.

The variable configuration outlet duct 14 includes a plurality of control flap members 16, 18, 20, 22 which collectively form the duct 14. In the Fig. 1 embodiment, a like plurality of seal members 24, 26, 28 are disposed circumferentially intermediate adjacent flap members and are maintained in a centered positioned therebetween by corresponding pivot links 30, 32, 34. Each control flap 16-22 is supported at the upstream end thereof by a universal joint 36, 38, 40 which permits the flap to pivot in the radial and circumferential planes with respect to the nozzle central axis 42. The trailing edges 44, 46, 48, 50 of the flaps 16-22 define the nozzle outlet from which high speed exhaust gases issue. The duct 14 may be reconfigured by collectively positioning the individual flap members 16-22 so as to selectively vector the discharge direction of the exhaust gases relative the nozzle central axis 42. This collective reconfiguration is accomplished by repositioning a unison ring 52 which is connected to each of the flap members 16-22 by flap links 54, 56, 58, 60.

Each flap link 54-60 is secured at each end by hinge joints so as to move the individual flap member 16-22 in the radial and circumferential plane about the corresponding upstream universal joint.

The unison ring 52 is supported relative to the static structure 12 by means of at least three cam races 62 which receive a corresponding number of rollers or pins 64 secured to the unison ring 52. The races 62, 64 prevent circumferential movement of the unison ring 52 while permitting portions of the ring to be moved axially by means of actuators 66 secured between the pin 64 and static structure 12.

As will be appreciated by viewing Fig. 1, the exhaust duct according to the present invention may be reconfigured in a variety of ways by translating the unison ring axially by means of the actuator 66. For example, the collective outlet area defined by the trailing edges 44-50 of the flap 16-22 may be varied by translating the entire unison ring 52 aftward, thereby collectively rotating the flaps radially inward. It will also be appreciated by those skilled in the art that the entire duct 14 may be skewed with respect to the fixed axis 42 by skewing the unison ring 52, that is by displacing portions of the circumference of the ring 52 at differing axial locations, thus, pitch and yaw vectoring, as well as combinations thereof, may be accomplished.

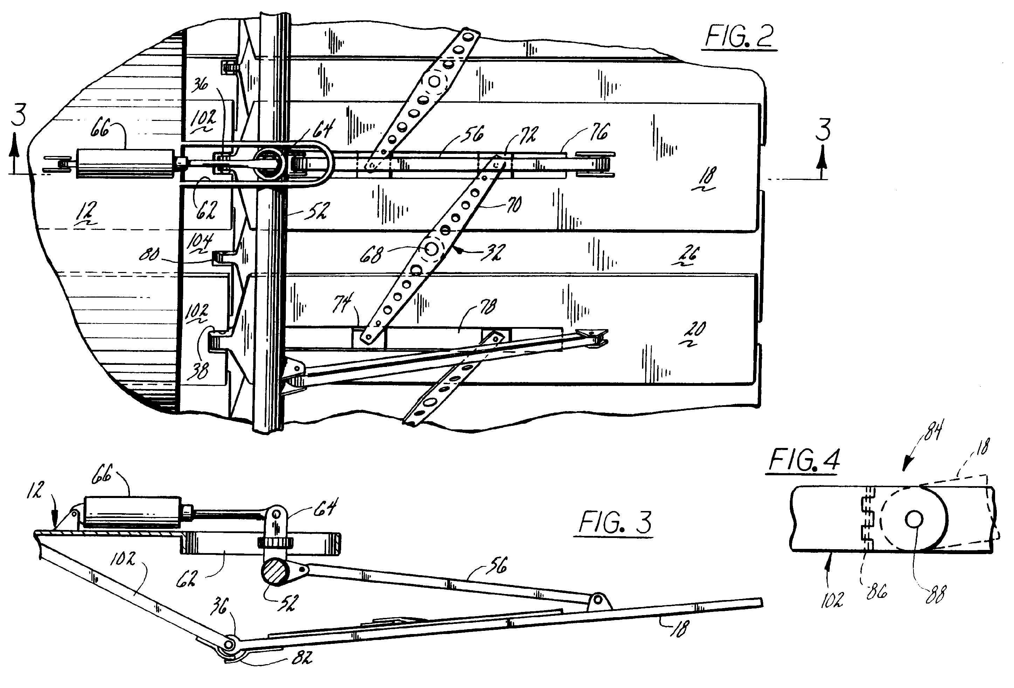

Figs. 2 and 3 show plan and sectional views of the flap 18, cam race 62, and pin 64. Seal member 26 is shown disposed in Fig. 2 between flaps 18 and 20. The seal 26 is located between the flaps 18 and 20 by the pivot link 32 which includes a central pivot 68, a spanner link 70 and sliders 72, 74 which are engaged with corresponding tracks 76, 78 on the flaps 18, 20. The seal 26 is supported at the upstream end thereof by a universal joint 80 which is similar to the joints 36, 38 supporting the flaps 18, 20.

The side view of Fig. 3 shows the control flap 18, flap link 56, unison ring 52 and the other system components. The flap universal joint 36 is also shown as being sealed against leakage of gas by overlapping leaf seals 82.

For high performance jet aircraft it is common to employ a variable throat area, convergent-divergent exhaust duct wherein the divergent section, represented by the duct 14 according to the present invention, is disposed downstream of a convergent section which is operable to define a variable area throat which is coincident of the upstream end of the divergent duct 14. Prior art convergent ducts include a plurality of convergent flap members 102 and convergent seal members 104 alternatively disposed to collectively form the convergent duct 106and means (not shown) for selectively positioning the convergent flap members and convergent seal members so as to define a variable area throat. Such convergent duct arrangements are well known in the art and will not be described in detail herein.

The divergent duct 14 according to the present invention, is well adapted to operate with such variable area convergent duct arrangements, with the upstream ends of the flaps 16-22 being secured to the downstream ends of the corresponding convergent flap members 102 by means of the universal joints 36-40 as described hereinabove. By properly positioning the unison ring 52 in conjunction with the movements of the convergent duct flaps, the duct 14 according to the present invention is well able to provide vectored thrust to the airframe under widely varying conditions of engine thrust, nozzle throat area, etc.

Fig. 4 shows an alternative universal joint design for supporting the upstream ends of the flap 16-22 wherein a double hinge arrangement is used. Shown in plan view, the joint 84 of Fig. 4 uses a first hinge 86 having a hinge line essentially tangential to the circumference of the duct 14 and a second hinge 88 having a hinge line oriented radially with respect to the duct 14. The first hinge 86 permits the flap 18 to rotate in a radial plane with respect to the nozzle centerline 42, while the second hinge 88 permits rotation of the flap 18 in the corresponding circumferential plane. The universal joint 84 as shown in Fig. 4 thus provides the degree of freedom necessary to accomplish the variable exhaust duct according to the present invention as well as offering the advantage of better sealing between the upstream structure 102 and the divergent control flaps 18 and seals of the duct 14 according to the present invention.

## Claims

1. An exhaust nozzle for selectively varying the direction of the discharge of a stream of exhaust gas, comprising
an exhaust duct (14) having an upstream entry end and a downstream discharge end, including
a plurality of flaps (16;18;20;22), each flap (16;18;20;22) disposed adjacent to other flaps (16;18;20;22) extending from the entry end to the discharge end and forming a portion of the exhaust duct perimeter,
**characterized by**
each flap (16;18;20;22) being secured at the upstream end thereof to a supporting universal joint (36;38;40); and
means (66,64,52,54,56,58,60), disposed between an adjacent upstream static structure (12) and each flap (16;18;20;22), for selectively positioning said flap (16;18;20;22) relative to the corresponding universal joint (36;38;40).

2. The nozzle as recited in claim 1, wherein the flaps (16;18;20;22) are generally of planar rectangular configuration and are arranged with one planar surface facing the interior of the duct (14).

3. The nozzle as recited in claim 2 further comprising a plurality of seals (24;26;28), each seal (24;26;28) disposed between two adjacent flaps (16;18;20;22) and slidingly engaged with the one planar surface of each flap (16;18;20;22).

4. The nozzle as recited in any of claims 1 to 3, wherein the universal joint (36;38;40) includes a first hinge (86) oriented tangentially with respect to the exhaust gas stream and a second hinge (88) oriented radially with respect to the exhaust gas stream.

5. The nozzle as recited in any of claims 1 to 4, wherein the positioning means (66,64,52,54,56,58,60) includes
- a ring (52), disposed generally coaxially with respect to the exhaust duct (14),
- a plurality of elongated links (54;56;58;60), each link (54;56;58;60) secured at one end thereof to the unison ring (52) and at the other end thereof to one of the flaps (16;18;20;22),
- means (64,66) for axially positioning and orienting the the ring (52).

6. The nozzle as recited in claim 5, wherein the links (54;56;58;60) are secured at the ends thereof by hinge joints.

7. The nozzle as recited in claim 5 or 6, wherein the unison ring (52) is supported by first and second pairs of axially extending cam races (62), each pair of races (62) located on one of two orthogonal transverse axis with respect to the exhaust stream, and
wherein the unison ring includes four equally circumferentially spaced pins (64), each pin (64) received within a corresponding cam race (62), and
wherein the positioning means (66,64,52,54,56,58,60) includes a plurality of actuators (66) disposed between the static structure (12) and the ring (52).

8. The nozzle recited in any of claims 1 to 7, further comprising
- a plurality of seals (24;26;28), each seal disposed between two adjacent flaps (16;18;20;22) and slidably engaged with a planar surface of each flap (16;18;20;22) facing the interior of the duct (14), and
- means (30;32;34), disposed between adjacent flaps (16;18;20;22) for maintaining the seal (24;26;28) disposed therebetween in a substantially centered orientation.

9. The nozzle recited in any of claims 1 to 8, wherein the flaps (16;18;20;22) are operable to vary the outlet area of the exhaust duct.

10. The nozzle recited in any of claims 1 to 9, wherein each flap (16;18;20;22) is secured at its upstream end to convergent flap member (102) of a convergent duct section, whereby a convergent-divergent exhaust duct is formed.

## Patentansprüche

1. Abgasdüse zum selektiven Verändern der Ausströmrichtung eines Abgasstroms, aufweisend
eine Abgasführung (14) mit einem stromaufwärtigen Eintrittsende und einem stromabwärtigen Ausströmende, aufweisend
eine Mehrzahl von Klappen (16; 18; 20; 22), wobei jede Klappe (16; 18; 20; 22) zu anderen Klappen (16; 18; 20; 22) benachbart angeordnet ist, sich von dem Eintrittsende zu dem Ausströmende erstreckt und einen Teil des Umfangs der Abgasführung bildet,
**dadurch gekennzeichnet,**
daß jede Klappe (16; 18; 20; 22) an ihrem stromaufwärtigen Ende an einem Abstütz-Universalgelenk (36; 38; 40) befestigt ist; und
daß eine Einrichtung (66, 64, 52, 54, 56, 58, 60) zwischen einer benachbarten, stromaufwärtigen, statischen Struktur (12) und jeder Klappe (16; 18; 20; 22) angeordnet ist zum selektiven Positionieren der Klappe (16; 18; 20; 22) relativ zu dem entsprechenden Universalgelenk (36; 38; 40).

2. Düse nach Anspruch 1, bei der die Klappen (16; 18; 20; 22) generell eine ebene rechteckige Gestalt haben und mit einer ebenen Fläche zu dem Inneren der Führung (14) gerichtet angeordnet sind.

3. Düse nach Anspruch 2, ferner aufweisend
eine Mehrzahl von Dichtungen (24; 26; 28), wobei jede Dichtung (24; 26; 28) zwischen zwei benachbarten Klappen (16; 18; 20; 22) angeordnet ist und verschiebbar mit der einen ebenen Fläche jeder Klappe (16; 18; 20; 22) zusammenwirkt.

4. Düse nach einem der Ansprüche 1 bis 3, bei der das Universalgelenk (36; 38; 40) ein erstes, tangential zu dem Abgasstrom ausgerichtetes Gelenk (86) und ein zweites, radial zu dem Abgasstrom ausgerichtetes Gelenk (88) aufweist.

5. Düse nach einem der Ansprüche 1 bis 4, bei der die Einrichtung (66, 64, 52, 54, 56, 58, 60) zum Positionieren aufweist:
- einen Ring (52), der zu der Abgasführung (14) generell koaxial angeordnet ist,
- eine Mehrzahl von länglichen Verbindungselementen (54; 56; 58; 60), wobei jedes Verbindungselement (54; 56; 58; 60) an seinem einen Ende an dem Abstimmring (52) und an seinem anderen Ende an einer der Klappen (16; 18; 20; 22) befestigt ist,
- eine Einrichtung (64, 66) zum axialen Positionieren und Ausrichten des Rings (52).

6. Düse nach Anspruch 5, bei der die Verbindungselemente (54; 56; 58; 60) an ihren Enden mit Gelenkverbindungen befestigt sind.

7. Düse nach Anspruch 5 oder 6, bei der der Abstimmring (52) von einem ersten und einem zweiten Paar von sich in Längsrichtung erstreckenden Eingreifführung (62) abgestützt ist, wobei jedes Paar von Führungen (62) an einer von zwei zu dem Abgasstrom orthogonalen Querachsen angeordnet ist, und
bei der der Abstimmring vier umfangsmäßig gleich beabstandete Bolzen (64) aufweist, von denen jeder in einer zugehörigen Eingreifführung (62) aufgenommen ist, und
bei der die Positioniereinrichtung (66, 64, 52, 54, 56, 58, 60) eine Mehrzahl von Betätigern (66) aufweist, die zwischen der statischen Struktur (12) und dem Ring (52) angeordnet sind.

8. Düse nach einem der Ansprüche 1 bis 7, ferner aufweisend
- eine Mehrzahl von Dichtungen (24; 26; 28), wobei jede Dichtung zwischen zwei benachbarten Klappen (16; 18; 20; 22) angeordnet ist und mit einer ebenen, zum Inneren der Führung (14) gerichteten Fläche jeder Klappe (16; 18; 20; 22) verschiebbar zusammenwirkt, und
- eine Einrichtung (30; 32; 34), die zwischen benachbarten Klappen (16; 18; 20; 22) angeordnet ist, um die Dichtung (24; 26; 28) dazwischen in einer im wesentlichen zentrierten Ausrichtung zu halten.

9. Düse nach einem der Ansprüche 1 bis 8, bei der die Klappen (16; 18; 20; 22) die Auslaßfläche der Abgasführung verändern können.

10. Düse nach einem der Ansprüche 1 bis 9, bei der jede Klappe (16; 18; 20; 22) an ihrem stromaufwärtigen Ende an einem konvergenten Klappenelement (102) eines konvergenten Führungsabschnitts befestigt ist, wodurch eine konvergent-divergente Abgasführung gebildet ist.

## Revendications

1. Tuyère d'échappement pour faire varier sélectivement la direction de l'évacuation d'un courant de gaz d'échappement, comprenant : un conduit d'échappement (14) ayant une extrémité d'entrée amont et une extrémité d'évacuation aval, comprenant
une multiplicité de voltes (16; 18; 20; 22), chaque volet (16; 18; 20; 22) disposé adjacent à d'autres voltes (16; 18; 20; 22) s'étendant depuis l'extrémité d'entrée jusqu'à l'extrémité d'évacuation et constituant une portion du périmètre du conduit d'échappement, caractérisé en ce que chaque volet (16; 18; 20; 22) est fixé au niveau de son extrémité amont à un joint universel (36; 38; 40) le supportant; et des moyens (66, 64, 52, 56, 58, 60) sont disposés entre une structure statique amont adjacente (12) et chaque volet (16; 18; 20; 22) pour positionner sélectivement ce volet (16; 18; 20; 22) par rapport au joint universel correspondant (36; 38; 40).

2. Tuyère selon la revendication 1, dans laquelle les volets (16; 18; 20; 22) ont généralement une configuration rectangulaire plane et sont disposés avec une surface plane en vis-à-vis de l'intérieur du conduit (14).

3. Tuyère selon la revendication 2, comprenant en outre une multiplicité d'éléments d'étanchéité (24; 26; 28), chaque élément d'étanchéité (24; 26; 28) étant disposé entre deux volets adjacents (16; 18; 20; 22) et coopérant en coulissement avec ladite surface plane de chaque volet (16; 18; 20; 22).

4. Tuyère selon l'une des revendications 1 à 3, dans laquelle le joint universel (36; 38; 40) comprend une première articulation (86) orientée tangentiellement par rapport au courant des gaz d'échappement et une deuxième articulation (88) orientée radialement par rapport au courant des gaz d'échappement.

5. Tuyère selon l'une des revendications 1 à 4, dans laquelle les moyens de positionnement (66, 64, 52, 54, 56, 58, 60) comprennent
- un anneau (52) disposé sensiblement coaxialement par rapport au conduit d'échappement (14),
- une multiplicité de bielles allongées (54; 56; 58; 60), chaque bielle (54; 56; 58; 60) étant fixée au niveau d'une extrémité à l'anneau de synchronisation (52) et à son autre extrémité à l'un des volets (16; 18; 20; 22), et
- des moyens (64, 66) pour positionner axialement et orienter l'anneau (52).

6. Tuyère selon la revendication 5, dans laquelle les bielles (54; 56; 58; 60) sont fixées au niveau de leurs extrémités par des joints articulés.

7. Tuyère selon la revendication 5 ou la revendication 6, dans laquelle l'anneau de synchronisation (52) est supporté par une première paire et une deuxième paire de chemins de came s'étendant axialement (62), chaque paire de chemins (62) étant située sur l'un des deux axes orthogonaux transversaux par rapport au courant d'échappement; dans laquelle l'anneau de synchronisation comprend quatre broches également espacées circonférentiellement (64), chaque broche (64) étant reçue à l'intérieur d'un chemin de came correspondant (62) et dans laquelle les moyens de positionnement (66, 64, 52, 54, 56, 58, 60) comprennent une multiplicité de vérins (66) disposés entre la structure statique (12) et l'anneau (52).

8. Tuyère selon l'une des revendications 1 à 7, comprenant en outre
- une multiplicité d'éléments d'étanchéité (24; 26; 28), chaque élément d'étanchéité étant disposé entre deux volets adjacents (16; 18; 20; 22) et coopérant en coulissement avec une surface plane de chaque volet (16; 18; 20; 22) en vis-à-vis de l'intérieur du conduit (14), et
- des moyens (30, 42; 34) disposés entre des volets adjacents (16; 18; 20; 22) pour maintenir l'élément d'étanchéité (24; 26; 28) disposé entre eux selon une orientation pratiquement centrée.

9. Tuyère selon l'une des revendications 1 à 8, dans laquelle les volets (16; 18; 20; 22) peuvent être actionnés pour faire varier la surface de sortie du conduit d'échappement.

10. Tuyère selon l'une des revendications 1 à 9, dans laquelle chaque volet (16; 18; 20; 22) est fixé au niveau de son extrémité amont sur un élément de volet convergent (102) d'une section de conduit convergente, d'où il résulte qu'il est formé un conduit d'échappement convergent-divergent.
